Europäisches Patentamt

European Patent Office

Office européen des brevets

(19)

(11) Veröffentlichungsnummer: **0 041 595**
**B1**

(12) **EUROPÄISCHE PATENTSCHRIFT**

(45) Veröffentlichungstag der Patentschrift:
20.06.84

(51) Int. Cl.³: **H 01 R 13/658, H 04 Q 1/14**

(21) Anmeldenummer: **81101711.0**

(22) Anmeldetag: **09.03.81**

(54) Anschlusseinheit für PCM-Kabel.

(30) Priorität: **06.06.80 DE 3021283**

(43) Veröffentlichungstag der Anmeldung:
**16.12.81 Patentblatt 81/50**

(45) Bekanntmachung des Hinweises auf die Patenterteilung:
**20.06.84 Patentblatt 84/25**

(84) Benannte Vertragsstaaten:
**AT BE CH FR IT LI LU NL SE**

(56) Entgegenhaltungen:
**CH - A - 509 003**
**DE - A - 1 143 883**
**DE - A - 2 329 334**
**GB - A - 2 017 428**
**GB - A - 2 018 054**
**GB - A - 2 021 332**
**US - A - 3 237 146**

(73) Patentinhaber: **KRONE GmbH, Goerzallee 311,**
**D-1000 Berlin 37 (DE)**

(72) Erfinder: **Müller, Manfred, Schwedenstrasse 3a,**
**D-1000 Berlin 65 (DE)**
Erfinder: **Achtnig, Klaus-Peter, Ostpreussendamm 106a,**
**D-1000 Berlin 45 (DE)**

(74) Vertreter: **Patentanwälte Beetz sen. - Beetz jun. Timpe -**
**Siegfried - Schmitt-Fumian, Steinsdorfstrasse 10,**
**D-8000 München 22 (DE)**

## Beschreibung

Die Erfindung betrifft eine Anschlusseinheit für Kabel zur Übertragung von Signalen mit Puls-Code-Modulation — kurz PCM-Kabel genannt.

Bisher war es üblich, höherpaarige Endverschlüsse mit niederpaarigen PCM-Kabeln zu versehen. So wird in der Praxis beispielsweise an einem Endverschluss für 12 DA (DA = Doppeladern) ein PCM-Kabel mit nur 6 DA angeschlossen. Diese Massnahme ist notwendig, um die erforderlichen elektrischen Werte für die Abschirmung zu gewährleisten. Nachteilig bei dieser bekannten Bauweise sind der Platzbedarf und ein hoher Kostenaufwand.

Aufgabe der Erfindung ist es, eine Anschlusseinheit für PCM-Kabel mit z.B. 10 DA zu schaffen, welche z.B. für das 30- und für das 120kanalige System geeignet ist und die als druckdichtes Kabelabschlussgerät sowie durch Weglassen von Gehäuseteilen als einfache Anschlussleiste verwendet werden kann.

Diese Aufgabe wird erfindungsgemäss dadurch gelöst, dass auf einer Grundplatte mehrere metallisch abgeschirmte Kunststoffgehäuse befestigt sind, dass in jedem Kunststoffgehäuse je zwei in der Grundplatte druckdicht und isoliert befestigte Anschlussstifte sowie mit diesen elektisch verbundene Klemmkontakte aufgenommen sind, und dass an der Unterseite der Grundplatte eine aus mehreren Zwischenwänden gebildete metallische Abschirmung für die Anschlussstifte und die mit diesen verbundenen Kabeladern vorgesehen ist.

Die angestrebten hohen Abschirmwerte werden durch das Vorsehen der gesonderten Kunststoffgehäuse sowie durch die aus einer entsprechenden Anzahl an Zwischenwänden bestehende Abschirmung erreicht, welche den Raum unterhalb der Grundplatte in eine den Kunststoffgehäusen entsprechende Anzahl von zum Kabelende hin offenen Kammern unterteilen.

Die angestrebten Abschirmwerte werden noch verbessert durch Abschirmbleche, die in jedem Kunststoffgehäuse angeordnet und an einen gemeinsamen Schirmverbinder angeschlossen sind.

Weitere vorteilhafte Ausgestaltungen der Erfindung sind Gegenstand von Unteransprüchen.

Im folgenden wird ein Ausführungsbeispiel der Erfindung anhand der Zeichnung im einzelnen beschrieben.

Es zeigen:

Fig. 1 eine als druckdichtes Kabelabschlussgerät ausgebildete Anschlusseinheit im Längsschnitt;

Fig. 2 eine Draufsicht auf das Kabelabschlussgerät nach Fig. 1;

Fig. 3 das Kabelabschlussgerät nach Fig. 1 im Querschnitt;

Fig. 4 eine teilgeschnittene Stirnansicht des Kabelabschlussgerätes nach Fig. 1.

Das in der Zeichnung dargestellte Kabelabschlussgerät besteht aus einer rechteckigen Grundplatte 1, in der eine Reihe von Anschlussstiften 24, 24' paarweise befestigt sind, aus einer Reihe von metallisch abgeschirmten Kunststoffgehäusen 20 auf der Oberseite der Grundplatte 1, in denen in den oberen Enden die Anschlussstifte 24, 24' sowie elektrische Klemmkontakte 13, 14, 15 angeordnet sind, und aus einer metallischen Abschirmung 3 an der Unterseite der Grundplatte 1.

Ferner ist bei der dargestellten Ausführung an der rechteckigen Grundplatte 1 ein die Abschirmung 3 druckdicht aufnehmendes Metallgehäuse 2 befestigt, das eine druckdichte Kabeleinführung 7, 8 für ein PCM-Kabel 9 aufweist.

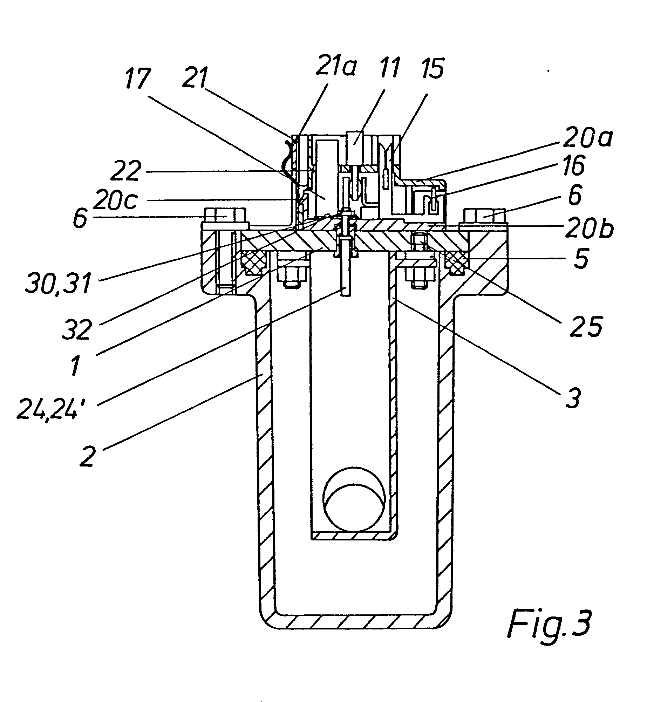

Die metallische Abschirmung 3 umfasst mehrere gebogene bzw. verformte Bleche 3b, 3c, 3d, die den Raum unter der Grundplatte 1 in eine den Paaren an Anschlussstiften 24, 24' entsprechende Anzahl von Kammern 3a unterteilen. In jede dieser Kammern 3a ragt ein Paar Anschlussstifte 24, 24' hinein, an denen die Adern 9a der einzelnen PCM-Kabel durch z.B. eine Lötverbindung befestigt sind. Die einzelnen Bleche 3b bis 3d der metallischen Abschirmung 3 sind mittels Schrauben 25 elektrisch leitend mit der Grundplatte 1 verbunden (vgl. Fig. 3). Die beiden äusseren Bleche 3c und 3d der Abschirmung 3 münden in einen gemeinsamen hülsenförmigen Teil 4, auf dem das Abschirmband des PCM-Kabels 9 mittels einer — nicht dargestellten — Schlauchklemme befestigt ist und durch dessen Innenraum die Doppeladern 9a der Einzelkabel hindurchgeführt sind.

Bei der dargestellten Ausführung eines Kabelanschlussgerätes wird das PCM-Kabel 9 durch eine Stirnwand in das Metallgehäuse 2 eingeführt. Zur Abdichtung des PCM-Kabels 9 gegenüber dem Gehäuseinneren dient ein aussen an der Gehäusewand befestigter Deckel 7 mit konischer Innenwand 12, der mit einer das Kabel 9 fest umschliessenden Dichtungsmasse 8 gefüllt ist. Zur Aufnahme von am PCM-Kabel 9 angreifenden Zugkräften ist der Kabelmantel 9b über eine Lasche 9c an einem Winkelprofil 10 angeschraubt, welches an einer Seitenwand der Abschirmung 3 befestigt ist. Zwischen zwei Muttern 26, 26' dieser Befestigungsschraube ist ein elektrischer Leiter 27 eingespannt, der an einen zusätzlichen, in der Grundplatte 1 befestigten Anschlussstift 24a angeschlossen ist, so dass eine elektrische Verbindung zwischen dem Aluminiummantel 9b des PCM-Kabels 9 und Schaltkontakten 13, 14, 15 hergestellt ist, die oberhalb des Anschlussstiftes 24a in einem zusätzlich auf der Grundplatte 1 montierten Kunststoffgehäuse 19 angeordnet sind.

Die Anschlussstifte 24, 24', 24a tragen ein Gewinde und dienen zusätzlich zu ihrer elektrischen Leiterfunktion zur Befestigung der einzelnen Kunststoffgehäuse 19, 20 auf der Grundplatte 1 mittels aufgeschraubter Muttern 32 (vgl. Fig. 3).

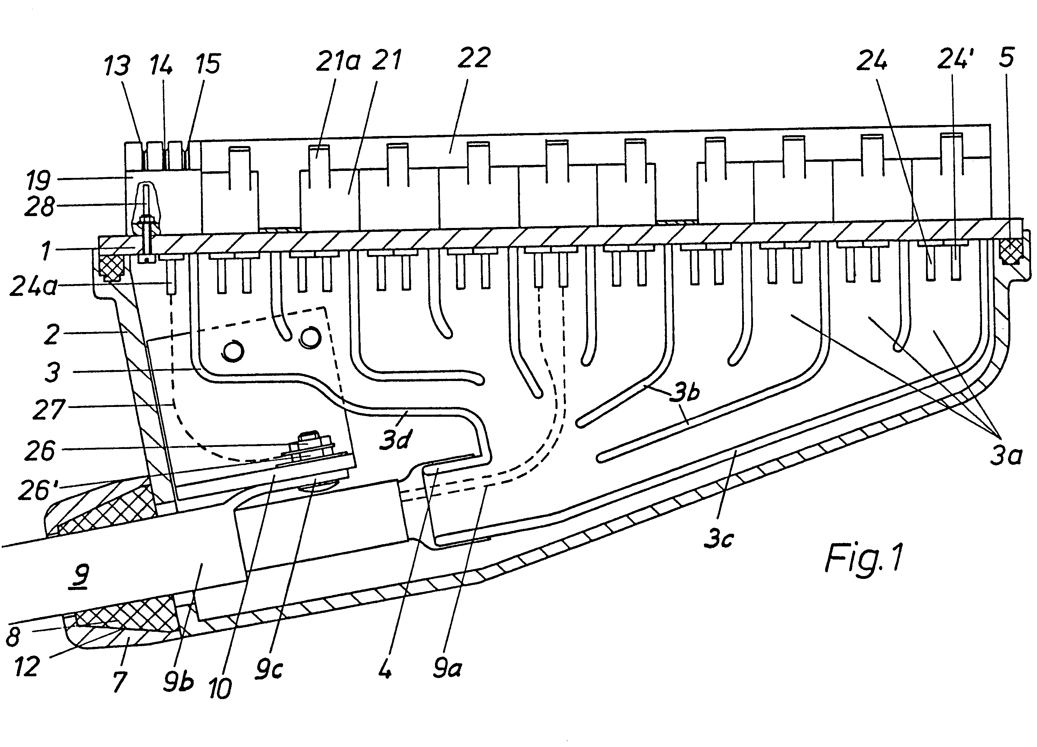

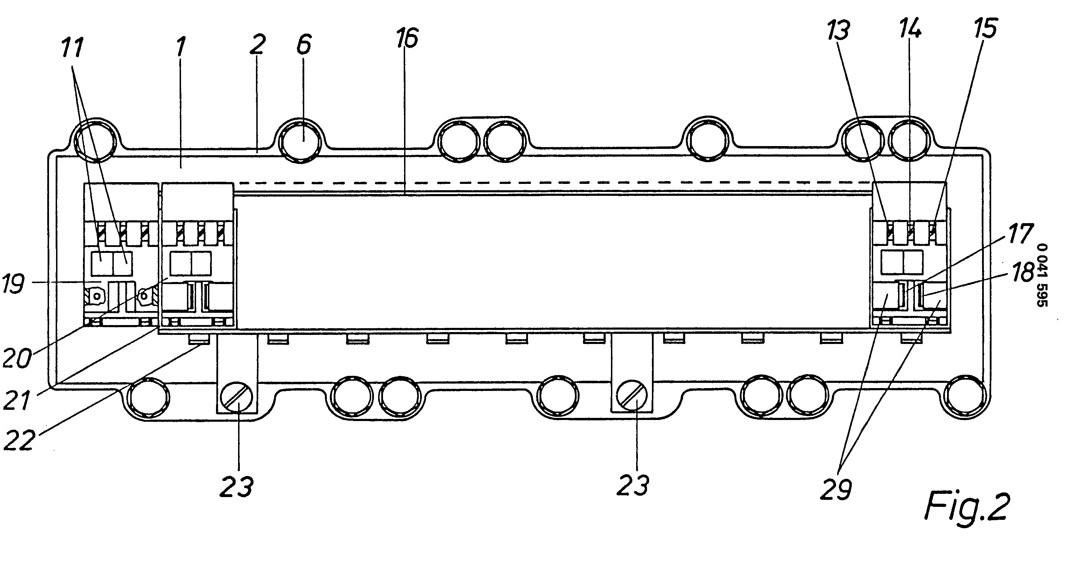

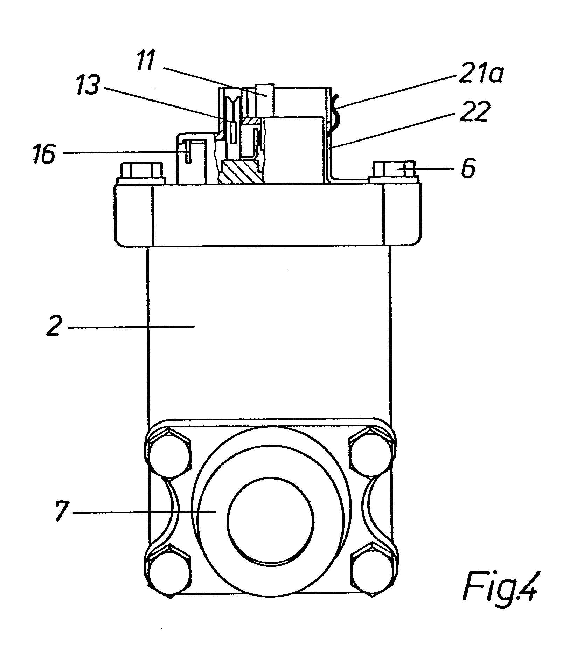

Wie aus Fig. 2 ersichtlich, ist jedes aus einem Oberteil 20a und einem Unterteil 20b bestehende Kunststoffgehäuse 20 von einem dünnen Abschirmblech 21 aus z.B. Kupfer umgeben, das unter den jeweiligen Gehäuseoberteil 20a greift und so an diesem festgelegt ist. Die Abschirmbleche 21 sind über Klemmverbindungen 21a an einen gemeinsamen Schirmverbinder 22 angeschlossen, der durch zwei Schrauben 23 elektrisch leitend am Metallgehäuse 2 befestigt ist. Das Gehäuseoberteil 20a ist mittels Haken 20c an dem auf der Grundplatte 1 angeschraubten Gehäuseunterteil 20b festgelegt (Fig. 1 und 4).

Die in jedem der Kunststoffgehäuse 20 angeordneten elektrischen Kontakte 13, 14, 15 sind als sog. LSA-PLUS-Kontakte ausgebildet. Diese speziellen löt-, schraub- und abisolierfreien Kontakte ermöglichen die Herstellung von elektrischen Verbindungen zwischen einem isolierten Leiterdraht und dem Kontakt, ohne dass zuvor die Drahtisolierung entfernt werden müsste. Zur Herstellung dieser elektrischen Verbindung wird das jeweilige Leiterdrahtende quer in einen Schlitz zwischen zwei aufrechten federnden Zungen hineingedrückt. An den Zungen sind seitliche Schneidkanten ausgebildet, welche beim Eindrücken des Drahtstückes in den Schlitz die Isolierung durchschneiden und eine formschlüssige Kontaktierung mit dem Leiterwerkstoff herbeiführen.

An die beiden LSA-PLUS-Kontakte 13, 14 gemäss Fig. 2 werden die a- und b-Adern und an den Kontakt 15 wird der Erdbeidraht eines abgehenden Kabels angeschlossen. Die elektrische Verbindung zwischen den Anschlussstiften 24, 24' und den LSA-PLUS-Kontakten 13, 14 erfolgt durch je einen Verbindungsstecker 11, der in einer Querwand im Gehäuseoberteil 20a festgelegt ist. Die LSA-PLUS-Kontakte 15 der Erdbeidrähte sind über abgewinkelte Stege an ihren unteren Enden isoliert durch die Abschirmbleche 21 der jeweiligen Kunststoffgehäuse hindurchgeführt und über eine gemeinsame Erdschiene 16 an den Kontakt im zusätzlichen Kunststoffgehäuse 19 ohne Abschirmung angeschlossen. Durch einen weiteren Verbindungsstecker 11 können die Erdbeidrähte bzw. die Erdschiene 16 elektrisch mit einem in der Grundplatte 1 bzw. im Metallgehäuse 2 sitzenden Stift 28 verbunden werden, der als einziger im zusätzlichen Kunststoffgehäuse 19 elektrisch leitend mit der Grundplatte 1 verbunden ist.

Zum Schutz der a- und b-Adern der ankommenden Kabel 9a sind Überspannungsableiter 29 in den Kunststoffgehäusen 20 vorgesehen, die zwischen dem jeweiligen Abschirmblech 21 und Blattfedern 17, 18 eingeklemmt sind. Diese Blattfedern 17, 18 erstrecken sich mit ihrem wirksamen Federblatt aufrecht im jeweiligen Kunststoffgehäuse 20 und sind mit einem unteren abgewinkelten Teil durch die Mutter 32 am jeweiligen Anschlussstift 24, 24' befestigt. Zur Lagefixierung der Blattfedern 17, 18 dienen am Boden des Gehäuseunterteils 20b angeformte Zapfen 30, 31 (Fig. 3).

Wie angegeben, stellt die vorstehend beschriebene Anschlusseinheit ein druckdichtes Kabelabschlussgerät dar. Je nach dem Anwendungsort und -zweck kann das mittels einer plastisch verformaren Dichtung 5 an der Grundplatte 1 montierte Metallgehäuse 2 weggelassen werden, so dass dann die Anschlusseinheit auch als einfache Anschlussleiste eingesetzt werden kann. Diese wahlweise Einsatzmöglichkeit stellt einen wesentlichen Vorteil der Erfindung dar.

## Patentansprüche

1. Anschlusseinheit für Puls-Code-Modulations-Kabel, dadurch gekennzeichnet, dass auf einer Grundplatte (1) mehrere metallisch abgeschirmte Kunststoffgehäuse (20) befestigt sind, dass in jedem Kunststoffgehäuse (20) je zwei in der Grundplatte (1) druckdicht und isoliert befestigte Anschlussstifte (24, 24') sowie mit diesen elektrisch verbundene Klemmkontakte (13 bis 15) aufgenommen sind, und dass an der Unterseite der Grundplatte (1) eine aus mehreren Zwischenwänden (3b) gebildete metallische Abschirmung (3) für die Anschlussstifte (24, 24') und die mit diesen verbundenen Kabeladern (9a) vorgesehen ist.

2. Anschlusseinheit nach Anspruch 1, dadurch gekennzeichnet, dass an der Grundplatte (1) ein die Abschirmung (3) druckdicht umschliessendes Metallgehäuse (2) mit einer Kabeleinführung (7, 8) befestigt ist.

3. Anschlusseinheit nach einem der Ansprüche 1 oder 2, dadurch gekennzeichnet, dass die elektrischen Klemmkontakte (13 bis 15) in jedem Kunststoffgehäuse (20) aus LSA-PLUS-Kontakten für die a- und b-Ader sowie dem Erdbeidraht der Einzelkabel bestehen, die mit den Anschlussstiften (24, 24') über je einen Verbindungsstecker (11) elektrisch leitend verbunden sind, und dass an den beiden Anschlussstiften (24, 24') Blattfedern (17, 18) zur Halterung von Überspannungsableitern (29) befestigt sind.

4. Anschlusseinheit nach einem der Ansprüche 1 bis 3, dadurch gekennzeichnet, dass jedes Kunststoffgehäuse (20) aus einem Gehäuseoberteil (20a) und einem Gehäuseunterteil (20b) besteht, wobei der Gehäuseoberteil (20a) mittels Rasthaken (20c) am Gehäuseunterteil (20b) und der Gehäuseunterteil (20b) mittels der ein Gewinde aufweisenden Anschlussstifte (24, 24') und je einer Mutter (32) an der Grundplatte (1) befestigt sind.

5. Anschlusseinheit nach einem der Ansprüche 1 bis 4, dadurch gekennzeichnet, dass alle Kunststoffgehäuse (20) aussen Abschirmbleche (21) aufweisen, die mit einem am Metallgehäuse (2) befestigten Schirmverbinder (22) elektrisch leitend verbunden sind.

6. Anschlusseinheit nach einem der Ansprüche 1 bis 5, dadurch gekennzeichnet, dass alle LSA-PLUS-Kontakte (15) der Erdbeidrähte mit einer Erdschiene (16) verbunden und über diese an einen zusätzlichen LSA-PLUS-Kontakt (15) in einem zusätzlichen Kunststoffgehäuse (19) ohne Abschirmung angeschlossen sind.

7. Anschlusseinheit nach Anspruch 5, dadurch gekennzeichnet, dass die Erdbeidrähte über einen Verbindungsstecker (11) an einen Stift (28) angeschlossen sind, der elektrisch leitend in der Grundplatte (1) befestigt ist.

8. Anschlusseinheit nach einem der Ansprüche 2 bis 7, dadurch gekennzeichnet, dass das Metallgehäuse (2) mittels einer plastischen Dichtungsmasse (5) an der Grundplatte (1) druckdicht angeschraubt ist.

9. Anschlusseinheit nach einem der Ansprüche 2 bis 8, dadurch gekennzeichnet, dass ein Kabel (9) in das Metallgehäuse (2) mittels einer Abdichtung eingeführt ist, die aus einem mit einer Dichtungsmasse (8) gefüllten Deckel (7) mit konischer Innenwand (12) besteht.

10. Anschlusseinheit nach einem der vorhergehenden Ansprüche, dadurch gekennzeichnet, dass zur Zugentlastung des eingeführten Kabels (9) der Kabelmantel (9b) an einem mit der Abschirmung (3) fest verbundenen Winkelprofil (10) befestigt ist, und dass der Aluminiumschirm des Kabels (9) über einen Leiter (27) an einen in das zusätzliche Kunststoffgehäuse (19) hineinragenden Anschlussstift (24a) elektrisch leitend verbunden ist.

11. Anschlusseinheit nach einem der Ansprüche 1 bis 10, dadurch gekennzeichnet, dass die Abschirmung (3) aus einer Vielzahl von die Zwischenwände bildenden gebogenen Blechen (3a, 3b, 3c) besteht, welche den Raum unterhalb der Grundplatte (1) in eine der Anzahl an Kunststoffgehäusen (20) entsprechende Anzahl von Kammern (3a) unterteilen, und dass die beiden äussersten Bleche (3c, 3d) in eine gemeinsame Hülse (4) übergehen, auf der das Abschirmband des Kabels (9) befestigt ist.

## Claims

1. Terminal unit for PCM cable, characterized in that a plurality of metal-shielded plastic housings (20) is mounted on a base plate (1), that each plastic housing (20) has accommodated therein two respective terminal pins (24, 24'), which are mounted in a pressure-sealed and insulated manner, and terminal contacts (13 to 15) electrically connected thereto, and that there is provided on the bottom surface of the base plate (1) a metallic shield (3) for the terminal pins (24, 24') and the cable wires (9a) connected thereto, said shield being formed of a plurality of partitions (3b).

2. Terminal unit according to claim 1, characterized in that a metal casing (2) including a cable inlet (7, 8) is provided on the base plate (1) so as to enclose the shield (3) in a pressure-sealed manner.

3. Terminal unit according to claim 1 or 2, characterized in that the electrical terminal contacts (13 to 15) in each plastic housing (20) consist of LSA-PLUS terminals for the a-wire and b-wire and the supplementary earth wire of the individual cables, which are electrically connected to the terminal pins (24, 24') through a respective connector (11), and that leaf springs (17, 18) for retaining voltage arresters (29) are mounted on each of the two terminal pins (24, 24').

4. Terminal unit according to any of the claims 1 to 3, characterized in that each plastic housing (20) consists of a top part (20a) and a bottom part (20b), the top part (20a) being secured to the bottom part (20b) by means of detents (20c) and the bottom part (20b) being secured to the base plate (1) by means of the threaded terminal pins (24, 24') and respective nuts (32).

5. Terminal unit according to any of the claims 1 to 4, characterized in that all of the plastic housings (20) are provided with external shrouds (21) which are conductively connected to a shroud connector (22) mounted on the metal casing (2).

6. Terminal unit according to any of the claims 1 to 5, characterized in that all of the LSA-PLUS terminals (15) of the supplementary earth wires are connected to an earth bus wire (16) and are connected via the same to an additional LSA-PLUS terminal (15) provided in an additional unshielded plastic housing (19).

7. Terminal unit according to claim 5, characterized in that the supplementary earth wires are connected via a connector (11) to a pin (28) which is conductively mounted in the base plate (1).

8. Terminal unit according to any of the claims 2 to 7, characterized in that the metal casing (2) is threaded in a pressure-sealed manner to the metal casing (2) by means of a plastic sealing composition (5).

9. Terminal unit according to any of the claims 2 to 8, characterized in that a cable (9) is lead into the metal casing (2) by means of a sealing unit consisting of a cover (7) having a tapered inner wall (12) and being filled with a sealing composition (8).

10. Terminal unit according to any of the preceding claims, characterized in that for the purpose of pressure-relief of the lead-in cable (9) the cable sheath (9b) is secured to an angle bracket (10) fixed to the shield (3), and that the aluminium shield of the cable (9) is conductively connected via a conductor (27) to a terminal pin (24a) which projects into the additional plastic housing (19).

11. Terminal unit according to any of the claims 1 to 10, characterized in that the shield (3) comprises a multiplicity of arcuate sheet metal members (3a, 3b, 3c) separating the space beneath the base plate (1) into a number of chambers (3a) corresponding to the number of plastic housings (20), and that the two outermost sheet metal members (3c, 3d) merge into a common sleeve (4) on which the shielding tape of the cable (9) is mounted.

## Revendications

1. Unité de raccordement pour câble de modulation par impulsions codées, caractérisée en ce que plusieurs logements en matière synthétique (20) à blindage métallique sont fixés sur une plaque de base (1), tandis que dans chaque logement en matière synthétique (20) viennent se placer chaque fois deux broches de raccordement (24, 24') fixées avec isolation et de manière étanche à la pression dans la plaque de base (1), ainsi que des contacts à bornes (13-15) raccordés électriquement à ces broches, et en ce que, sur la face inférieure de la plaque de base (1), on prévoit un blindage métallique (3) constitué de plusieurs cloisons (3b) pour les broches de raccordement (24, 24') et les conducteurs de câble (9a) raccordés à ces broches.

2. Unité de raccordement suivant la revendication 1, caractérisée en ce que, sur la plaque de base (1), est fixé un logement métallique (2) entourant le blindage (3) de manière étanche à la pression et comportant une entrée de câble (7, 8).

3. Unité de raccordement suivant l'une des revendications 1 ou 2, caractérisée en ce que les contacts électriques à bornes (13-15) disposés dans chaque logement en matière synthétique (20) sont constitués de contacts LSA-PLUS pour les conducteurs a et b, ainsi que du conducteur de terre des câbles individuels, qui sont raccordés chacun avec conduction d'électricité aux broches de raccordement (24, 24') à l'intervention d'une fiche de raccordement (11), et en ce que, sur les deux broches de raccordement (24, 24'), sont fixés des ressorts à lame (17, 18) en vue de maintenir des éclateurs déchargeurs (29).

4. Unité de raccordement suivant l'une des revendications 1 à 3, caractérisée en ce que chaque logement en matière synthétique (20) est constitué d'une partie supérieure (20a) et d'une partie inférieure (20b), la partie supérieure (20a) du logement étant fixée au moyen de crochets d'arrêt (20c) sur la partie inférieure (20b), tandis que cette partie inférieure (20b) du logement est fixée à la plaque de base (1) au moyen des broches de raccordement (24, 24') comportant un filet, et également chaque fois au moyen d'un écrou (32).

5. Unité de raccordement suivant l'une des revendications 1 à 4, caractérisée en ce que tous les logements en matière synthétique (20) comportent extérieurement des plaques de blindage (21) qui sont assemblées avec conduction d'électricité à un connecteur de blindage fixé au logement métallique (2).

6. Unité de raccordement suivant l'une des revendications 1 à 5, caractérisée en ce que tous les contacts LSA-PLUS (15) des conducteurs de terre sont raccordés à un rail de terre (16) et, à l'intervention de ce dernier, sont raccordés sans blindage à un contact LSA-PLUS supplémentaire (15) dans un logement supplémentaire en matière synthétique (19).

7. Unité de raccordement suivant la revendication 5, caractérisée en ce que les conducteurs de terre sont raccordés *via* une fiche (11) à une broche (28) qui est fixée avec conduction d'électricité dans la plaque de base (1).

8. Unité de raccordement suivant l'une des revendications 2 à 7, caractérisée en ce que le logement métallique (2) est vissé à la plaque de base (1) de manière étanche à la pression grâce à une masse d'étanchéité plastique (5).

9. Unité de raccordement suivant l'une des revendications 2 à 8, caractérisée en ce qu'un câble (9) est introduit dans le logement métallique (2) au moyen d'une garniture étanche qui est constituée d'un couvercle (7) ayant une paroi intérieure conique (12) et étant rempli d'une masse d'étanchéité (8).

10. Unité de raccordement suivant l'une des revendications 1 à 9, caractérisée en ce que, pour décharger de la traction le câble introduit (9), la gaine du câble est fixée à un profilé angulaire (10) fixé au blindage (3), tandis que le blindage en aluminium du câble (9) est raccordé avec conduction d'électricité et à l'intervention d'un conducteur (27) à une broche de raccordement (24a) pénétrant dans le logement supplémentaire en matière synthétique (19).

11. Unité de raccordement suivant l'une des revendications 1 à 10, caractérisée en ce que le blindage (3) est constitué de plusieurs plaques (3a, 3b, 3c) pliées formant les cloisons et subdivisant l'espace situé en dessous de la plaque de base (1) en un nombre de chambres (3a) correspondant à celui des logements en matière synthétique (20), tandis que les deux plaques extérieures extrêmes (3c, 3d) se rejoignent en une douille commune (4) sur laquelle est fixée la bande de blindage du câble (9).

13 14 15    21a 21    22                    24  24'  5

19
28
1
24a
2
3
27
26
26'

3b

3d

3a

3c

9

8
12    7  9b  10  9c    4  9a

Fig.1

0 041 595

0 041 595

*Fig.2*

Fig.3

Fig.4